# EUROPEAN PATENT SPECIFICATION

(11) **EP 0 650 039 B1**
(45) Date of publication and mention of the grant of the patent: **09.06.1999**
(21) Application number: 94114870.2
(22) Date of filing: 21.09.1994
(51) Int. Cl.: G01J 5/08

(54) **A pyroelectric type infrared sensor**
Pyroelektrischer Infrarotsensor
Détecteur infrarouge pyroélectrique

(30) Priority: 22.09.1993 JP 23620293; 22.09.1993 JP 23620393
(43) Date of publication of application: 26.04.1995
(60) Divisional application: 98100154.8
(73) Proprietor: MATSUSHITA ELECTRIC INDUSTRIAL CO., LTD., Kadoma-shi, Osaka 571-8501 (JP)
(72) Inventor: Fujikawa, Kazuhiko, Takatsuki-shi, Osaka 569 (JP); Nomura, Koji, Shijyonawate-shi, Osaka, 575 (JP); Shiono, Teruhiro, Osaka-shi, Osaka, 547 (JP); Ogawa, Hisahito, Ikoma-gun, Nara, 636-01 (JP)
(74) Representative: Grünecker, Kinkeldey, Stockmair & Schwanhäusser Anwaltssozietät

(56) References cited:
- WO-A-87/00297
- GB-A- 2 165 639
- US-A- 4 445 759
- US-A- 5 073 007
- PROCEEDINGS OF THE SPIE, vol. 1544, Miniature and Micro-Optics: Fabrication and System Applications, 1991 T. WERNER et al. "Microlens array for staring infrared imager" pages 46-57
- PATENT ABSTRACTS OF JAPAN, unexamined applications, P field, vol. 12, no. 51, February 16, 1988 THE PATENT OFFICE JAPANESE GOVERNMENT page 31 P 667; & JP-A-62 197 725 (MATSUSHITA)

## Description

The present invention relates to a pyroelectric type infrared sensor for detecting infrared rays over a wide range by a pyroelectric element.

Recently, pyroelectric type infrared sensors have been used for measuring temperatures of cooking stuff in microwave ovens, controlling room temperature by air conditioners, person detecting in auto-doors or alarm devices, and the like by utilizing the feature that the pyroelectric type infrared sensors can detect temperature or things without contact, and it is seen that the field of the application will be expanded.

A pyroelectric type infrared sensor is utilizing pyroelectric effect of a lithium tantalate (LiTaO₃) single crystal and the like. A pyroelectric substance has a self polarization characteristics, so surface charges are always generated, but the surface charges combine with the charges in the atmosphere to keep electrically neutral state in stationary condition. Once infrared rays incident, the temperature of the pyroelectric substance is changed, accordingly the neutral of the charge state on the surface is destroyed and changed. At that time, the charge generated on the surface is detected to measure the amount of the incident infrared rays, this is the pyroelectric type infrared sensor. Generally, substances emit infrared rays according to their temperatures, the existence or the temperature of the objects can be detected by using the pyroelectric type infrared sensor.

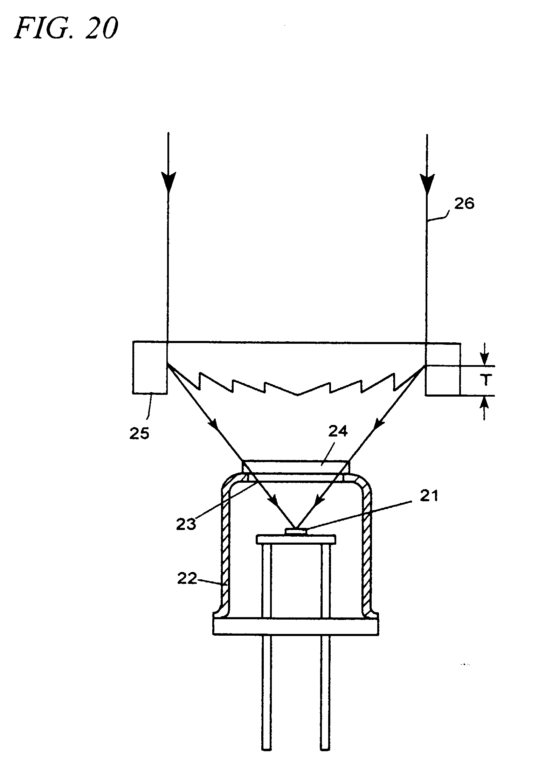

So far, this kind of conventional pyroelectric type infrared sensors is structured as shown in Fig. 20. The structure will be described hereinafter.

Fig 20 is a sectional view showing a constitution of a conventional pyroelectric type infrared sensor. A pyroelectric element 21 is formed of ceramics and detects infrared rays. A seal tube 22 covers the pyroelectric element 21 to protect it from disturbance light and electromagnetic noise. An incident infrared ray filter 24 is installed at the opening 23 of the seal tube 22. An external lens 25 is placed outside of the seal tube 22, and focuses or images the infrared rays 26 emitted from the object onto the pyroelectric element 21 onto the pyroelectric element 21. An external lens 25 is a refraction type fresnel lens formed of polyethylene resin utilizing refraction action of light. The depth T of each of the recessed slots of the fresnel lens is increased as the position of the recessed slot moves outwardly so that the declining angle of the slot becomes larger, the light is refracted at the oblique surface of the recessed slot and focused. The recessed slots are arranged in equal distances, and the distances between the slots and the depths of the slots are from hundreds to thousands times larger than the wave length, the dimension is too large.

In this conventional pyroelectric type infrared sensor, the external lens 25 is a refraction type lens disposed outside of the seal tube 22 and focusing or imaging the infrared rays 26 emitted from the object onto the pyroelectric element, the size of the external lens 25 becomes larger due to the constitution described above. Further the size of pyroelectric sensor becomes larger due to the positional relationship between the external lens 25 and the seal tube 22, and this causes the problem that the realizing compact size is difficult.

Also, another problem is that the infrared rays 26 focused and imaged onto the pyroelectric element 21 have to pass the external lens 25, accordingly the quantity of the light incidenting onto the pyroelectric element 21 becomes very small due to the influence of the reflection and absorption of the light when the light is passed the external lens and this results in lowering the detection sensibility.

In "Microlens array for staring infrared imager", proceeding of the SPIE, Vol. 1544, pages 46 to 57, by T. Werner, 1991, an infrared sensor is described comprising a sealed body having an opening and an infrared detecting element with a diffraction optical element provided in front of the infrared detecting element for focusing or imaging the infrared radiation onto the detecting element. JP-A-62197725 describes a heat ray detector with the filter stuck onto a Fresnel lens. US-A-5073007 describes diffraction optical elements with different shapes.

An object of the invention is to realize a compact pyroelectric type infrared sensor without using external lenses and to improve sensitivity for detecting infrared rays.

This object is achieved with a pyroelectric sensor having the features of claim 1. Special embodiments are the subject matter of the subclaims.

The diffraction optical elements are integrally formed on the front or back surface of said incident infrared ray filter to focus and image the incident infrared rays onto the pyroelectric element by diffracting the infrared rays. So, the dimension of the diffraction optical element cannot be larger than that of the incident infrared ray filter, there is no need to provide an external lens outside of the seal tube, accordingly the compactness can be achieved.

Also, as there is no external lens, the influence due to the reflection and absorption by the external lens is eliminated, sufficient infrared rays thus incident to the pyroelectric element, and this results in improvement of the detecting sensibility.

Also, when optical adjustment is performed beforehand so that the infrared rays passing the diffraction optical element array provided on the incident infrared ray filler are focused and imaged onto the pyroelectric element. As the diffraction optical element is fixed in the directions of the optical axis and of the rotation of two axes (x, y axes) on a plane perpendicular to the optical axis in the step of installing the incident infrared ray filter onto the outside of the seal tube, the optical adjustment is completed by only positioning of rotating directions of x, y, and the light axis, accordingly, the optical adjustment of the diffraction optical element can be performed easily.

Also, by adopting a diffraction optical element array, more wide detecting range than in a single diffraction optical element can be obtained.

Fig. 1 is a sectional view of an example of a pyroelectric type infrared sensor.

Fig. 2 is an enlarged sectional view of a diffraction optical element of the pyroelectric type infrared sensor.

Fig. 3 is a perspective view showing the operation in the optical adjustment of the diffraction optical element of the pyroelectric type infrared sensor.

Fig. 4 is a plane view an example of a diffraction optical element of a pyroelectric type infrared sensor.

Fig. 5 is an enlarged sectional view of a diffraction optical element of the pyroelectric type infrared sensor.

Fig. 6 is an enlarged sectional view of a diffraction optical element of another pyroelectric type infrared useful in understanding the invention

Fig. 7 is a process view of the diffraction optical element of a pyroelectric type infrared sensor.

Fig. 8 is a sectional view of a pyroelectric type infrared sensor useful in understanding the present invention.

Fig. 9 is an enlarged sectional view of a pyroelectric element of the pyroelectric type infrared sensor.

Fig. 10 is a perspective view of a the pyroelectric type infrared sensor of an embodiment of the present invention.

Fig. 11 is a sectional view of the pyroelectric type infrared sensor.

Fig. 12 is an enlarged sectional view of the diffraction optical element of the pyroelectric type infrared sensor.

Fig. 13 is a plane view of the diffraction optical element array of the pyroelectric type infrared sensor.

Fig. 14 is a sectional view of the diffraction optical element array of the pyroelectric type infrared sensor.

Fig. 15 shows the detecting range of the diffraction optical element array of the pyroelectric type infrared sensor.

Fig. 16 shows incident infrared rays onto the diffraction optical element array of the pyroelectric type infrared sensor.

Fig. 17 is a process view of a diffraction optical element of the pyroelectric type infrared sensor.

Fig. 18 is an enlarged sectional view of a diffraction optical element of the pyroelectric type infrared sensor of a second embodiment of the present invention.

Fig. 19 is an enlarged sectional view of a diffraction optical element of a pyroelectric type infrared sensor useful in understanding the present invention.

Fig. 20 is a sectional view of a conventional pyroelectric type infrared sensor.

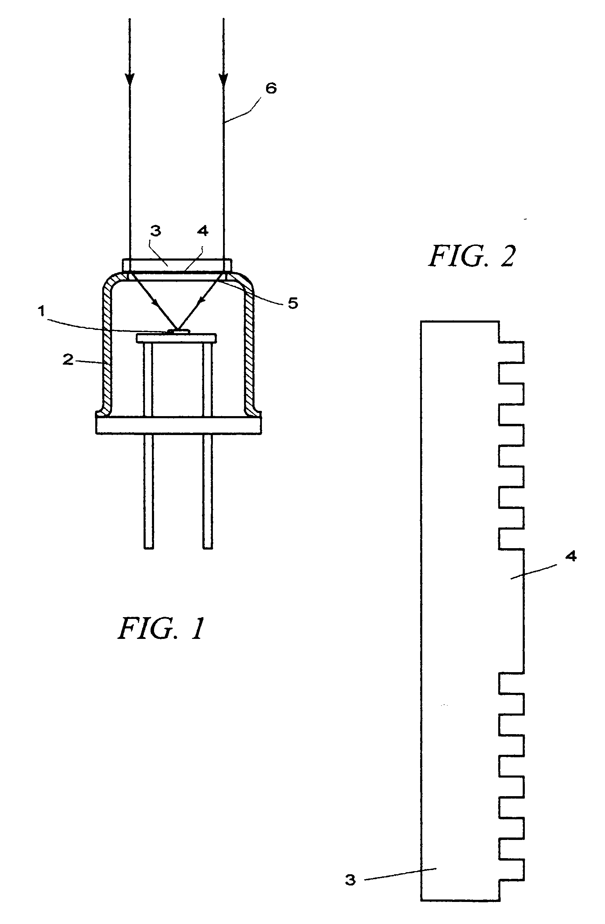

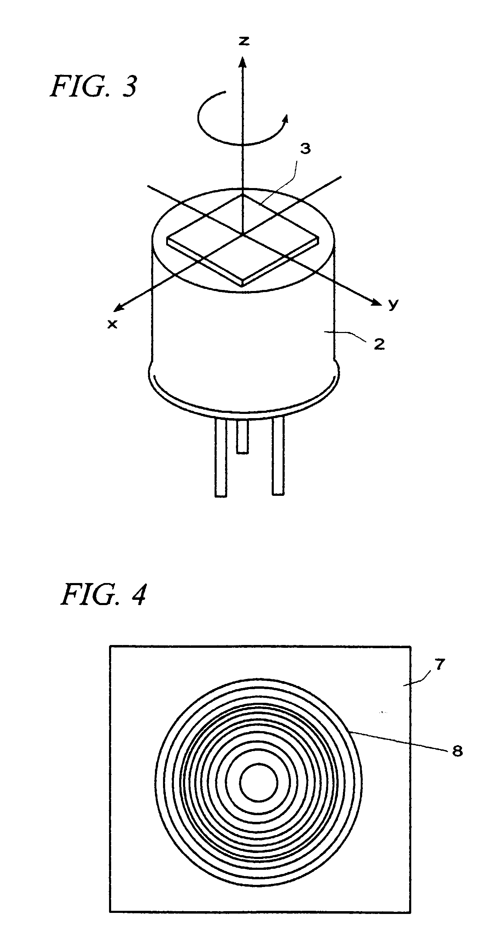

Fig. 1 is a sectional view of an example of a pyroelectric type infrared sensor. Fig. 2 is an enlarged sectional view of a diffraction optical element of the pyroelectric type infrared sensor. Fig. 3 shows the operation in the optical adjustment of the diffraction optical element.

As shown in Fig. 1, the pyroelectric element 1 is formed of lithium tantalate (LiTaO₃), used for detecting infrared rays 6, and disposed in the seal tube (seal body) 2. The seal tube 2 is used for protecting the pyroelectric element 1 from disturbance light and electromagnetic noise. The outside diameter of the seal tube is 5 mm and an opening 5 of 2.5 mm diameter is provided on the upper portion of the tube. An incident infrared filter 3 is formed of a silicon substrate of 0.4 mm in thickness and 3 mm square, and provided so as to cover the opening 5 at the outside of the opening 5. A diffraction optical lens (diffraction optical element) 4 is formed on the back side surface, which is facing the pyroelectric element 1, of the incident infrared ray filter 3, and refracts the infrared rays to focus or image. The diffraction optical lens 4 is formed in an ultra thin shape and as shown in Fig. 2, has rectangular shaped recessed slots and the depths of the slots are identical over the whole surface of the diffraction optical lens 4.

The operation of the constitution described above will be illustrated. The infrared rays 6 emitted from the object to be detected reach the incident infrared ray filter 3 without receiving influence of the reflection and absorption, keeping original light quantity of the infrared rays 6 themselves and pass through the diffraction optical lens 4 formed on the back side surface of the incident infrared filter 3, focused or imaged on the pyroelectric element 1 disposed in the seal tube 2. As a result, temperature of the pyroelectric element 1 is changed, accordingly charge state on the surface changed from neutral state. The charge generated on the surface in this moment is detected to measure amount of the incident infrared rays. Here, as the diffraction optical lens 4 is integrally formed with the incident infrared ray filter 3, the size of the diffraction optical lens 4 cannot be larger than the incident infrared filter 3 and there is no need to install a lens for focusing or imaging the infrared rays 6 onto the pyroelectric element 1 at the outside of the seal tube 2. Further as not being influenced by the reflection and absorption of the infrared rays 6, the infrared rays can be sufficiently focused or imaged onto the pyroelectric element 1.

As the diffraction optical lens 4 for focusing or imaging the infrared rays is integrally formed with the incident infrared ray filter 3, the size of the diffraction optical lens 4 cannot be larger than the incident infrared filter 3, and there is no need to install an external lens at the outside of the seal tube 2, so the pyroelectric type infrared sensor can be made compact.

Further as no external lens is provided, the light quantity incidenting into the pyroelectric element 1 is not reduced by the influence due to the reflection and absorption of the infrared rays 6, the infrared rays thus can be sufficiently focused or imaged onto the pyroelectric clement 1 and this results in improvement of the sensitivity of the pyroelectric type infrared sensor.

As described above, the diffraction optical lens 4 is provided on the back surface of the incident infrared ray filter 3 though, the same effect can be obtained by providing the diffraction optical lens 4 on the front surface of the incident infrared ray filter 3.

Also, as shown in Fig. 3, when the diffraction optical lens 4 is optically adjusted, as the diffraction optical lens 4 is fixed in the directions of the optical axis and of rotation of two axes (x, y axes) on a plane perpendicular to the optical axis in the step of installing the incident infrared ray filter 3 onto the seal tube 2, the optical adjustment is completed by only positioning of rotating directions of x, y, and the light axis, so the optical adjustment can be performed easily.

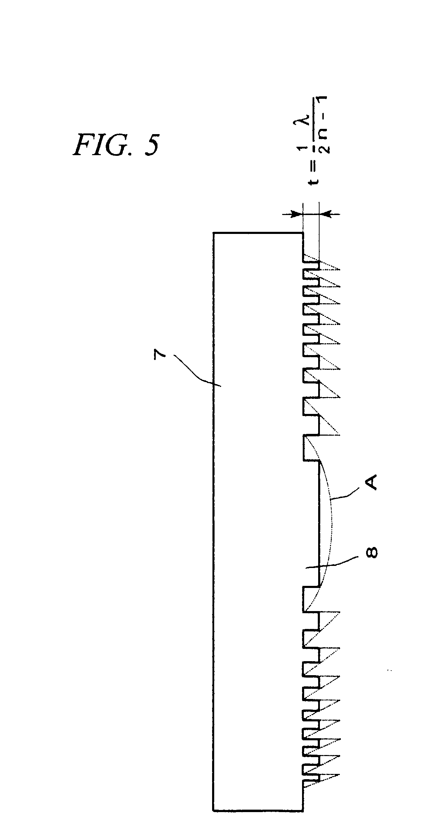

Next, another pyroelectric type infrared sensor will be illustrated referring to Fig. 4 and Fig. 5. This pyroelectric type infrared sensor is formed by improving the diffraction optical lens 4 of the sensor of Fig. 1 to 3. Fig. 4 is a plane view of the diffraction optical lens formed by improving the diffraction optical lens. Fig. 5 is an enlarged sectional view of the diffraction optical lens.

As shown in Fig. 4 and Fig. 5, the diffraction optical lens 8 formed on the back surface of the incident infrared ray filter 7 has recessed slots corresponding to phase modulation amounts, the depths of the all recessed slots of the diffraction optical lens 8 are the identical, the shapes of the recessed slots are coaxial circles, the periods of the slots are getting smaller towards the circumference so as to depend on the wavelength of incident infrared rays, and so as to up the focusing efficiency of infrared rays by diffraction phenomena. Other parts of the constitution are the same as above.

The operation in said constitution will be illustrated. The diffraction optical lens 8 has recessed slots corresponding to phase modulation amounts, and the pitches and depths of recessed slots are adapted to depend on the wavelength of incident infrared rays 6, the side faces of rugged figure A corresponding to the phase modulation amounts agree with the edges of the recessed slots. When the depth of the recessed slots is denoted as t, the wave length of the infrared rays 6 as λ, refractive index of the diffraction optical lens 8 as n,$\text{t = λ/ 2 (n - 1)}$ and at this moment, the diffraction efficiency of the infrared rays 6 at the diffraction optical lens 8 becomes a maximum. Accordingly, the diffraction efficiency of infrared rays 6 incidenting to the diffraction optical lens 8 is improved. As a result, the light quantity of infrared rays 6 focused or formed to image on the pyroelectric element I is increased.

As described above, this sensor has another effect in addition to the effect of the sensor of Fig. 1 to 3. The diffraction optical lens 8 has recessed slots corresponding to phase modulation amounts, and the pitches and depths of the recessed slots depend on the wavelength of incident infrared rays 6, the periods of the recessed slot patterns of coaxial circle shapes are getting smaller towards the circumference, the side faces of the rugged figure A corresponding to the phase modulation amounts agree with the edges of the recessed slots. As a result, the focusing efficiency of infrared rays 6 by diffraction phenomena can be increased, the diffraction efficiency of the diffraction optical lens 8 thus increased, the light quantity of the infrared rays 6 focused or imaged on the pyroelectric element 1 is increased, and the sensibility is increased.

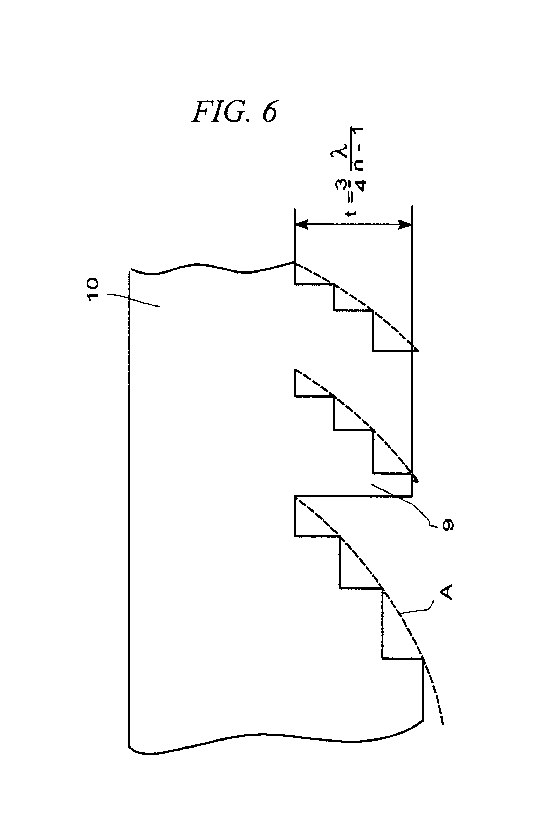

Next, another sensor useful in understanding the invention will be illustrated referring to Fig. 6. This pyroelectric type infrared sensor is formed by improving the diffraction optical lens 4 of the sensor of Fig. 4. Fig. 6 is an enlarged sectional view of the improved diffraction optical lens.

As shown in Fig. 6, the diffraction optical lens 9 formed on the incident infrared ray filter 10 has recessed slots corresponding to phase modulation amounts, these recessed slots are formed in stairs-like shapes with four steps. Other parts of the constitution are the same as in the sensor of Fig. 1 to 3.

The operation in said constitution will be illustrated. The diffraction optical lens 9 is formed in a shape having stairs with four steps so that the four edges of the steps agree with a surface of the rugged figure A corresponding to the phase modulation amounts. The pitches and the depth of the recessed slots depend on the wave length of the incident infrared rays 6. When the depth of the recessed slots is denoted as t, the wave length of the infrared rays 6 is denoted as λ, refractive index of the diffraction optical lens 9 is denoted as n,$\text{t = 3 λ / 4 (n - 1)}$

The diffraction efficiency of infrared rays 6 at the diffraction optical lens 9 is, if the reflection is neglected, about 81 %, so the diffraction efficiency of infrared rays 6 incidenting to the diffraction optical lens 9 is improved. As a result, the light quantity of the infrared rays focused or imaged on the pyroelectric element 1 can be increased.

Further, a diffraction optical lens is formed in a shape having stairs with m steps (m = 2ⁿ , n is positive integer of larger than 0) so that the edges of the steps agree with a surface of the rugged figure A corresponding to the phase modulation amounts. The pitches and the depth of the recessed slots depend on the wave length of the incident infrared rays 6. When the depth of the recessed slots is denoted as t, the wave length of the infrared rays 6 is denoted as λ, refractive index of the diffraction optical lens 9 is denoted as n,$\text{t = (m-1) / m X λ / 4 (n - 1)}$

If m is made larger, the diffraction efficiency of the infrared rays 6 incidenting to the diffraction optical lens 9 is improved. That is, the diffraction efficiencies of infrared rays 6, if the reflection is neglected, are about 41 % when the number of the steps m = 2; 81 % at m = 4: 95 % at m = 8; 99% at m=16.

As described above, this embodiment has another effect in addition to the effect of the sensor of Fig. 4. The diffraction optical lens 9 is formed in a stairs like shape so that the edges of the stairs agree with a surface of the rugged figure A corresponding to the phase modulation amounts. The pitches and depths of the recessed slots depend on the wavelength of incident infrared rays 6. As a result, diffraction efficiency of the diffraction optical lens 9 is improved, so the light quantity of the infrared rays 6 focused or imaged on the pyroelectric element 1 is increased, and the sensibility of the pyroelectric type infrared sensor can be further increased. Especially, the diffraction efficiency at 16 steps of recessed slot is, if the reflection is neglected, about 99 %.

Next, another example useful in understanding the invention will be illustrated, The incident infrared ray filter 3 and the diffraction optical lens (diffraction optical element) 4 are made of the identical substance including at least one selected from silicon and germanium or at least one selected from gallium and indium and at least one selected from arsenic and phosphorus.

The operation of the above constitution will be illustrated. As the incident infrared ray filter 3 and the diffraction optical lens (diffraction optical element) 4 are made of the identical substance including at least one selected from silicon and germanium or at least one selected from indium or germanium and at least one selected from arsenic and phosphorus, the diffraction optical lens 4 can be formed inside of the incident infrared filter 3 resulting in making the pyroelectric type infrared sensor more compact. Further, the refractive index of the diffraction optical lens can be made larger, so the depth of the recessed slots on the diffraction optical lens 4 can be made shallower, and this results in shorter manufacturing time.

Here, if the incident infrared ray filter 3 and the diffraction optical lens 4 are made of a substance including at least one selected from the group of silicon, germanium, gallium arsenide, indium phosphate, and gallium phosphate, the effect is further improved.

By forming a non-reflective interference film on the front or back surface of the diffraction optical lens 4, 8, or 9 in each of the embodiments, as the reflection at the diffraction optical lens 4, 8, or 9 becomes little, the sensibility of the pyroelectric type infrared sensor can be further improved.

Also, by providing an interference film filter which passes only a specific wave length range on the opposite side surface of the infrared ray filter 3, 7, or 10 to the surface on which the diffraction optical lens 4, 8, or 9 is formed, the disturbance light such as the sun light and incandescent light is cut, and the sensibility of the pyroelectric type infrared sensor can be further improved.

Further, diffraction optical lens 4, 8, or 9 is used as a diffraction optical element though, the same effect can be obtained by using a variable refractive index type diffraction optical lens.

Next, the steps for forming stairs-like shaped recessed slots on the diffraction optical lens 9 in the sensor of Fig. 6 will be illustrated.

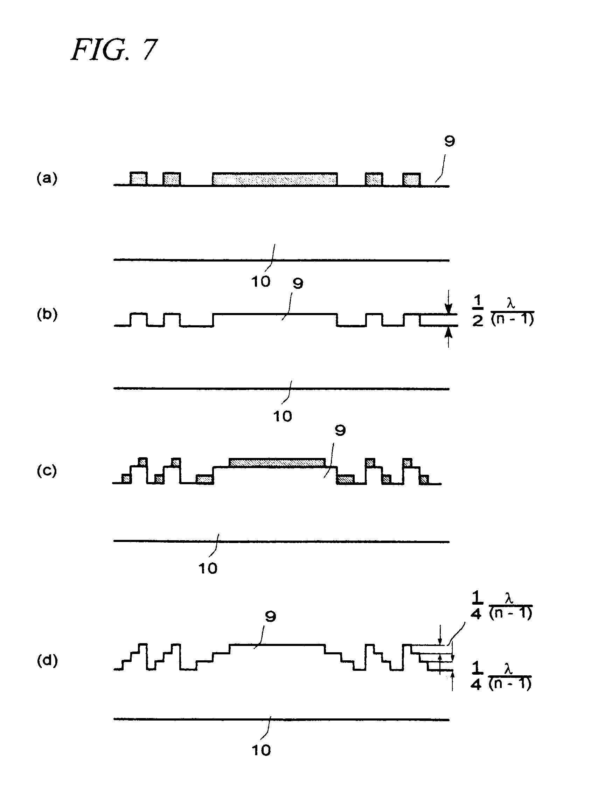

As shown in Fig. 7, the stairs-like shaped recessed slots are formed by etching. The manufacturing steps in the case of the stairs having four steps comprises: a first step for forming a resist pattern by photolithography as shown in Fig. 7 (a); a second step for making slots by dry etching to the depth 1/2 X λ/(n-1) as shown in Fig. 7(c), where, n denotes refractive index of the diffraction optical lens 9. λ denotes wavelength of the incident infrared rays; a third step for forming a resist pattern by photolithography as shown in Fig. 7 (c); and a fourth step for making slots by dry etching to the depth 1/4 X λ/ (n-1) as shown in Fig. 7(d).

Like this, as the recessed slots of stairs-like shape on the diffraction optical lens 9 is formed by etching, the recessed slots can be formed in rectangular shape having sharp and accurate edges, this results in readiness of manufacturing the diffraction optical lens 9. As the diffraction optical lens 9 is formed in a stairs-like shape corresponding to phase modulation amount, so the diffraction optical lens 9 is easily formed.

The four step recessed slots are illustrated above though, steps 8 and over can be formed by dry etching from the state shown in Fig 7 (d). Also, the diffraction optical lens 9 in the third embodiment was illustrated above though, the diffraction optical lens 4 or 8 in the first and second embodiment can be formed in the same manner.

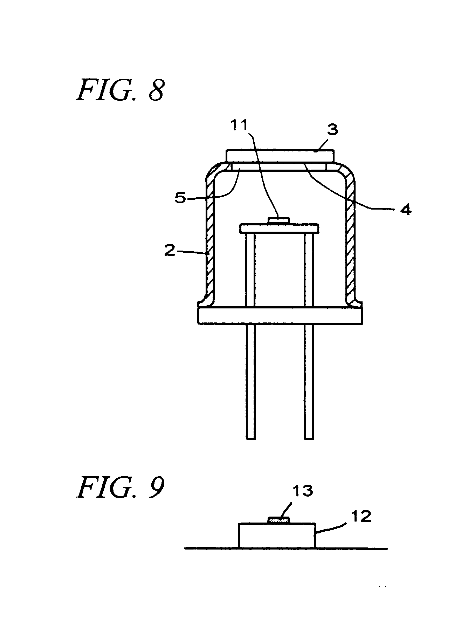

Next, a further pyroelectric type sensor useful in understanding the invention will be illustrated referring to Fig. 8 and Fig. 9. The same portions as in the embodiment 1 are attached the same marks and the illustration for them are omitted.

Fig. 8 is a sectional view of this pyroelectric type infrared sensor, Fig. 9 is a front view of the pyroelectric element.

As shown in the drawings, the pyroelectric element 11 is made by providing a thin film 13 of lead titanate (hereinafter denoted as PLT) including lanthanum on a magnesium oxide substrate 12. The thin film 13 has a dimension of 300 X 300 µm square for example. The PLT thin film 13 of one tenth area of ceramic type has the equivalent sensitivity as the ceramic type, and the PLT thin film 13 further has ten times higher response speed. Accordingly, the size of a seal tube for accommodating a pyroelectric element 11 can be decreased.

Since the PLT thin film 13 is used as a pyroelectric element 11 in the embodiment, the pyroelectric type infrared sensor can be made smaller.

Next, an embodiment of the invention will be illustrated referring to drawings. The same portions as in the sensor of Figures 1 to 3 are attached the same marks and the illustration for them are omitted.

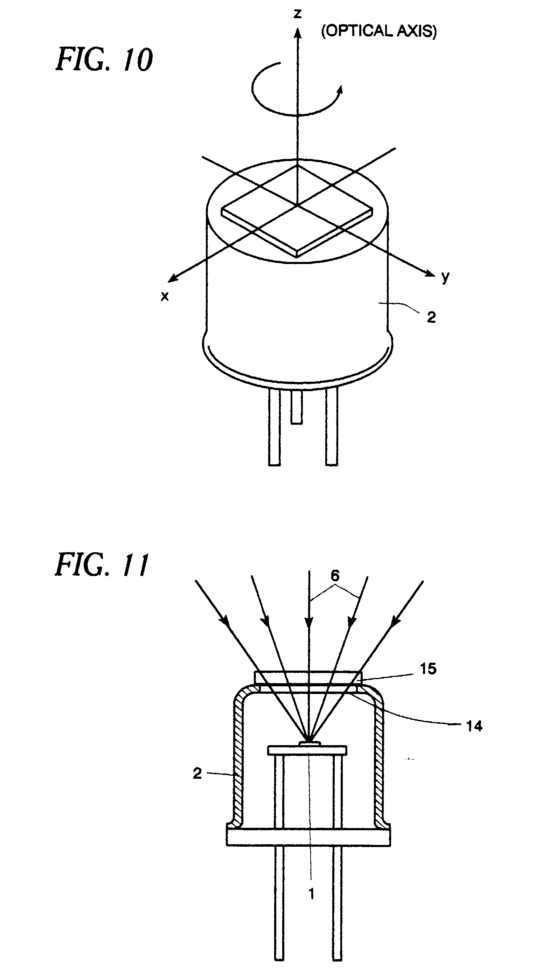

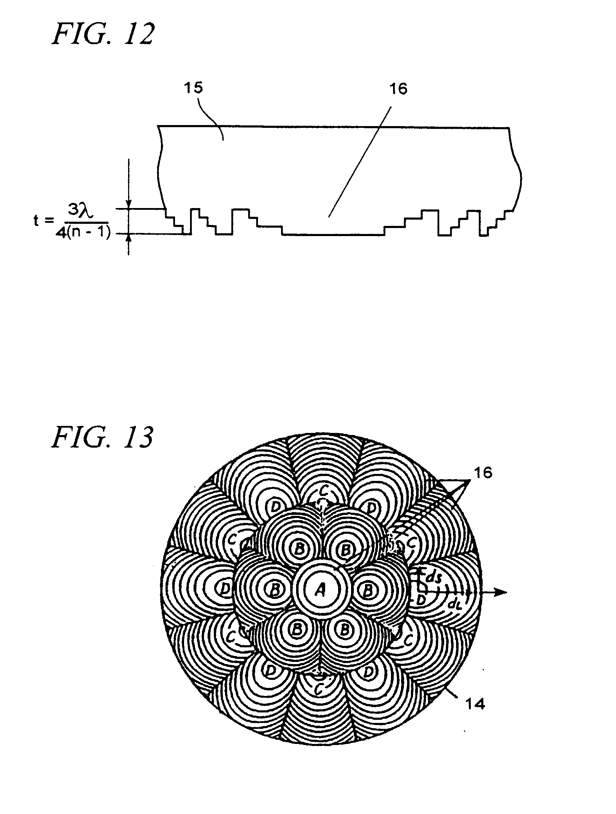

Fig. 10 and Fig. 11 are a perspective view and a sectional view of a pyroelectric type infrared sensor of the sixth embodiment of the present invention respectively.

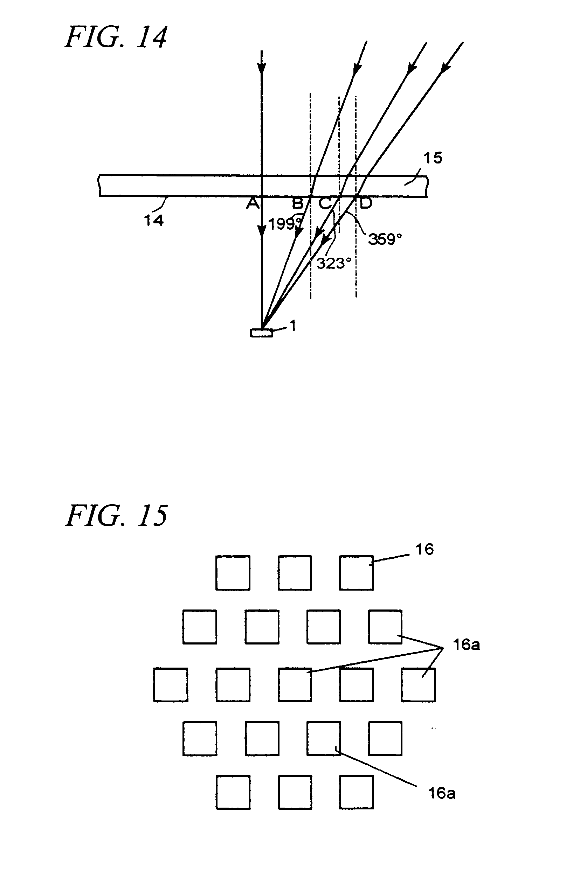

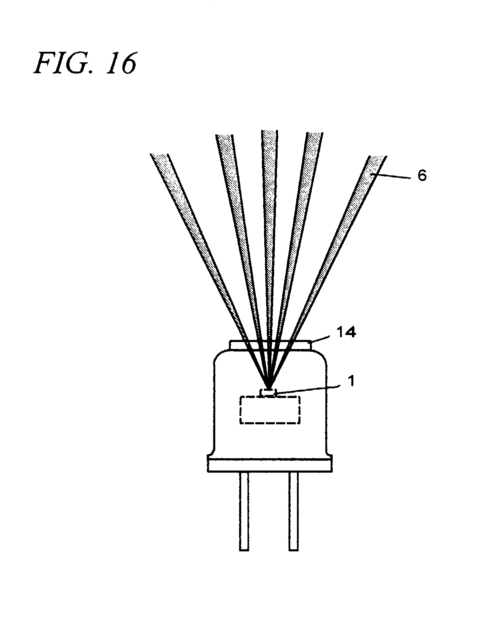

As shown in the drawings, a diffraction optical element array 14 is used for focusing or imaging the infrared rays 6 onto the pyroelectric element 1, and installed integrally on the inner surface of the incident infrared ray filter 15, and a plurality of diffraction optical lenses (diffraction optical elements) 16 are radially formed as shown in Fig. 12 - Fig. 14. These diffraction optical lenses 16, as shown in Fig. 15, are equidistantly spaced so that the visual fields 16a cover all the area to be detected. Each of the diffraction optical lenses 16, as shown in Fig. 14 and Fig. 16, focuses or images the incident infrared rays having the incident angles corresponding to the visual fields shown in Fig. 15 onto the pyroelectric element 1 in order to correspond to the visual field shown in Fig. 15. For example, to the perpendicular of the surface of the diffraction optical element array 14 formed on the incident infrared filter 15, the incident angle of the diffraction optical lens 16 at A position in Fig. 13 and Fig. 14 is 0°, the incident angle of the diffraction optical lens 16 at B position is 19.9°, the incident angle of the diffraction optical lens 16 at C position is 32.3°, the incident angle of the diffraction optical lens 16 at D position is 35.9°.

The operation in the above constitution will be illustrated. First, infrared rays 6 emitted from an object to be detected in a certain direction reach the incident infrared ray filter 15. The reached infrared rays 6 is focused or imaged on the pyroelectric element 1 by the diffraction optical lens 16 corresponding to them in the diffraction optical element array 14 formed on the back surface of the incident infrared filter 15. As a result, temperature of the pyroelectric element 1 is changed. Then neutral state of charge state on the surface is broken and changed. The charge in this moment is detected to measure quantity of incident infrared rays.

In this embodiment, a plurality of the diffraction optical lenses 16 having a different incident angle respectively are formed as the diffraction optical element array 14 integrally with the incident infrared filter 15. Accordingly, the infrared rays in a wide range can be detected. By this constitution, there is no need to provide an external lens outside of a seal tube 2, resulting in the compact size. Also, as there is no external lens, the permeability can be improved. For example, suppose that the lens is of polyethylene and human detecting, since the wave length of the infrared rays emitted from a human body is about 10 µm and permeability at this case is about 50 %, so the permeability is about two times of the case having an external lens. Also cost down is achieved because of no external lens. Also, when the infrared rays 6 passing a plurality of diffraction optical lenses 16 formed on the incident infrared ray filter 15 is adjusted beforehand so as to focus or image on the pyroelectric element 1, since the direction of optical axis and the rotation direction of the two axes (x, y axes) on a plan perpendicular to the optical axis are fixed beforehand in the step for installing the incident infrared ray filter 15 to the seal tube 2 as shown in Fig. 10, the optical adjusting is completed by only positional arranging of rotation direction of x, y axes and optical axis. Accordingly, optical adjusting is easy.

Next, a plurality of the diffraction optical lenses 16 forming the diffraction optical element array 14 have recessed slots corresponding to the phase modulation amount of each of the lenses, and the periods of the recessed slot patterns are getting shorter as move outward as shown in Fig. 12, Fig. 13 so as to focus at a spot by utilizing diffraction phenomena. All the depths of the recessed slots of the diffraction optical lens 16 are the identical, and the depth and the surface figure depend on the wave length of incident infrared rays, the light is focused by utilizing diffraction phenomena of the light.

In this constitution, since the depth of the recessed slots are identical all over the diffraction optical lens 16, recessed slots can be formed easily by etching.

In this embodiment, as shown in Fig. 12, sectional figure of the recessed slot is stairs like shape with four steps. It was discovered that the maximum depth t of the recessed slots which makes the primary diffraction efficiency of the diffraction optical lens 16 maximum, is:$\text{t = 3 / 4 X λ / (n-1)}$ where, n is the refractive index, λ is the wave length of an incident light. The primary diffraction efficiency in this case is 81 % if the reflection on the surface is neglected.

Also, with a plurality of the diffraction optical lenses 16 forming the diffraction optical element array 14, as shown in Fig. 13, the recessed slot pattern in the positions B, C, and D where incident angles are not 0 is elliptical in shape, and each center position of the ellipses is gradually slid in the one direction of the major axis as the ellipse moves outward.

By this constitution, optical aberration can be corrected, so that there is no need to form the diffraction optical lenses 16 in a solid shape to prevent the optical aberration. The inventors of the present invention found that the optical aberration can be corrected following condition that when the sectional shape of recessed slots is a stairs with four steps, θ denotes oblique incident angle, λ denotes the wave length of infrared rays, f denotes image side focal length, n denotes refractive index of a passage medium (air in this embodiment), major axis of M th ellipse is:${\text{d}}_{\text{L}} {\text{= 2 / cos θ X [( M λ / 4n cos θ)}}^{\text{2}} {\text{+M λ f / 2]}}^{\text{0.5}}$ the minor axis is:${\text{d}}_{\text{S}} {\text{= d}}_{\text{L}} \text{X cos θ}$ the parting interval (the interval between the center position of M th ellipse and that of M+1 th ellipse):$\text{e = M λ tan θ / 4n cos θ}$

As a result, diffraction optical lenses capable excellently focusing also an oblique incident light can be obtained.

Also, diffraction efficiency of a diffraction optical lens 16 is generally decreased as the incident angle is increased. But by enlarging the area of a plurality of diffraction optical lenses 16 forming the diffraction optical element array 14 as they go outward, the decrease of the diffraction efficiency due to increase of incident angle and the decrease of quantity of incident light due to the increase of detecting distance can be compensated. As a result, nearly uniform sensitivity can be obtained even if incident angles or detecting distances are different.

Also, by arranging the plurality of diffraction optical lenses closely without gaps, this light receiving area can be effectively used and the diffraction optical element array 14 can be made smaller.

Also, the incident angle to the diffraction optical lenses 16 in the central portion of the diffraction optical element array 14 is 0 . By making the incident angle to the diffraction optical lens 16 gradually larger as it goes outward, the zone where the numerical aperture of the diffraction optical lens 16 is small, that is, the diffraction efficiency is high for each of the diffraction optical lenses 16 can be obtained. As a result, the diffraction optical lenses 16 having the sufficiently high efficiency of focusing light can be obtained.

Next, a seventh embodiment of the invention will be illustrated. A incident infrared ray filter 15 and a diffraction optical lens 16 are made of the identical substance including at least one selected from silicon and germanium, or at least one selected from gallium and indium and at least one selected from arsenic and phosphorus.

The operation of the above constitution will be illustrated. The refractive index of the incident infrared ray filter 15 made of silicon is about 3.5. When human detecting is considered, since the wave length of the infrared rays emitted from human body is about 10 µm, the depth t of the recessed slot is 3 µm when its sectional figure is stairs having four steps. This depth is about one fifth of the case using polyethylene (the refractive index n is about 1.5) for forming the diffraction optical lens 16, the depth of the recessed slot can be made shallower, an accurate lens figure can be readily realized in short time by a planar process such as etching and deposition. Also, because of the shallow recessed slot, the diffraction efficiency in the circumference where the period is small is good, further, the decreasing of the diffraction efficiency for oblique incident light is small. The diffraction optical lens having excellent optical characteristics described above can be obtained.

Also, whichever materials of germanium, gallium arsenide, indium phosphide, and gallium phosphide, have a refractive index n of more than 3 as same as silicon, so the depth of the recessed slot can be wade shallower by using them, accurate lens figure can be realized, thus the diffraction optical lens 16 having excellent focus characteristics can be obtained.

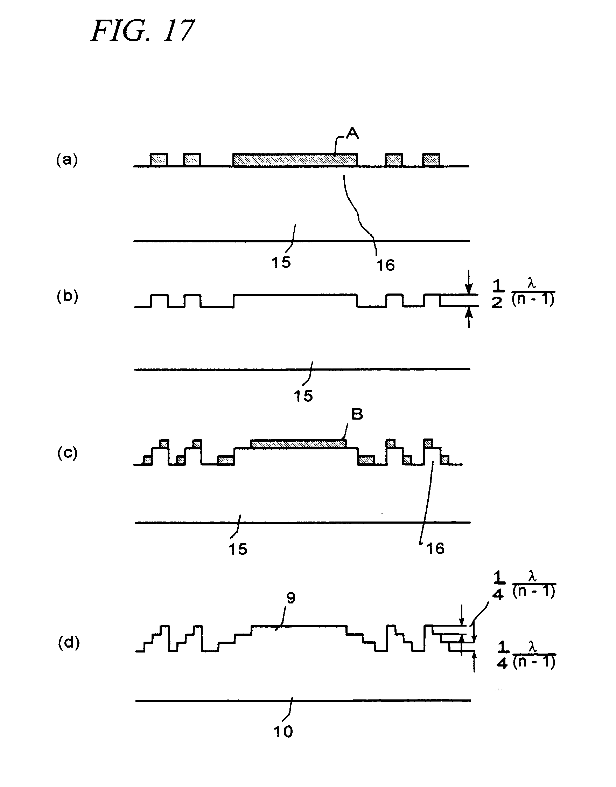

Next, the steps for forming stairs-like recessed slot will be illustrated. As shown in Fig. 17, the stairs-like recessed figure of the diffraction optical lens 16 is formed by etching. In the case of that the figure of the recessed slot is stairs with four steps, a resist pattern A shown in Fig. 17 (a) is formed by a first process of photolithography, next, recessed slots are made by the depth about 1 / 2 x λ / (n-1) by dry etching as shown in Fig. 17 (b), here n denotes refractive index, λ denotes the wave length of incident light. Next, the resist pattern B shown in Fig. 17 (c) is formed by the second process of photolithography. Next, the recessed slots are dry etched by a depth about 1/4 x r/(n-1). and the diffraction optical lens 16 is formed. Especially, using dry etching, the edges of the rectangular can be make in sharp and accurate figures, and this results in a diffraction optical lens 16 having an excellent diffraction efficiency.

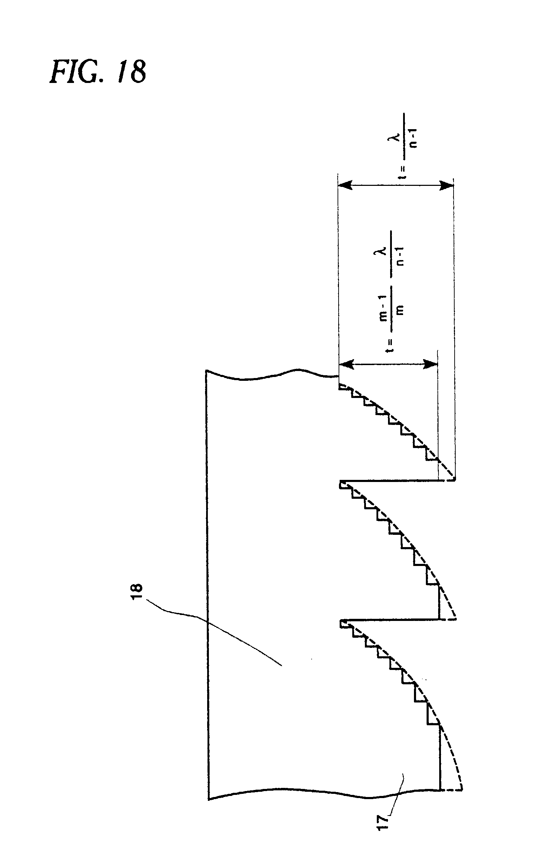

Next, a second embodiment of the present invention will be illustrated referring to Fig. 18.

Fig. 18 is a schematic sectional view of this diffraction optical lens. As shown in the figure, the diffraction optical lens 17 is formed at an incident infrared ray filter 18, though one pitch of the recessed slot in the embodiment of Fig. 10 is formed in four step figure by two processes, here one pitch of recessed slot is formed by more processes (m steps), for example m = 8. The inventors found out that the most suitable maximum depth t of the recessed slot is :$\text{(m-1) / m x λ / (n-1)}$ where, n denotes refractive index, λ denotes the wavelength of the incident light, As the number of steps increase, focusing efficiency becomes higher. When the number of steps m is around 16 and the reflection is neglected, the focusing efficiency increases to about 99 % at its maximum. The most suitable, maximum depth at this case is about λ / (n-1).

Also, regarding the diffraction optical lenses 17 whose optical axes having respectively an angle with respect to the direction of the perpendicular of the surface of a pyroelectric element 1 are scattered, the inventors found that the optical aberration can be corrected by following condition that, when θ denotes an oblique incident angle, λ denotes the wavelength of the infrared rays, f denotes the focal length of image side, n denotes the refractive index of passage medium (air in the invention), major axis is:${\text{d}}_{\text{L}} {\text{= 2 / cos θ X [(M λ / m n cos θ)}}^{\text{2}} {\text{+2 M λ f / m]}}^{\text{0.5}}$ the minor axis is:${\text{d}}_{\text{S}} {\text{= d}}_{\text{L}} \text{X cos θ}$ the parting interval is:$\text{e = M λ tanθ / m n cos θ}$

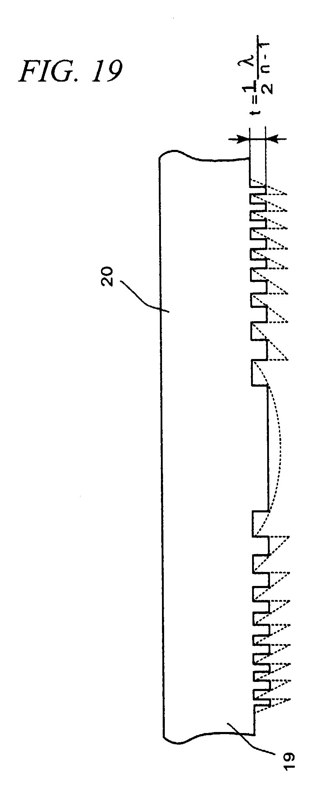

Next, a sensor useful in understanting the invention will be illustrated referring to Fig. 19.

Fig. 19 is a schematic sectional view of a diffraction optical lens 19 of this sensor. As shown in the figure, the diffraction optical lens 19 is formed at a incident infrared ray filter 20, the shape of the recessed slot of the diffraction optical lens 19 is rectangular, and further, the pitch of the recessed slot becomes smaller as the position of the slot moves outward.

It is found that the most suitable maximum depth t of the recessed slot to make the primary diffraction efficiency of the diffraction optical lens 19 maximum is:$\text{t = 1 / 2 X λ / (n-1)}$ where, n denotes refractive index, λ denotes the wavelength of the incident light.

The diffraction efficiency of this constitution is about half (41 %) of that of the diffraction optical lens 16 of the embodiment of Fig. 10 when the reflection is neglected, but the diffraction optical lens 19 is formed by one etching process, accordingly the mass production is easy.

Also, regarding the diffraction optical lenses 19 whose optical axes having respectively an angle with respect to the direction of the perpendicular of the surface of a pyroelectric element 1 are scattered, it is found that the optical aberration can be corrected by following condition that, when θ denotes an oblique incident angle, λ denotes the wavelength of the infrared rays, f denotes the focal length of image side, n denotes the refractive index of passage medium (air in the invention), major axis is:${\text{d}}_{\text{L}} {\text{= 2 / cos θ X [( M λ / 4 n cos θ)}}^{\text{2}} {\text{+2 M λ f / m]}}^{\text{0.5}}$ the minor axis is:${\text{d}}_{\text{S}} {\text{= d}}_{\text{L}} \text{X cos θ}$ and the parting interval :$\text{e = M λ tan θ / 2n cos θ.}$

Especially, using not wet etching but dry etching, the edges of the rectangular can be made in sharp and accurate figures, and this results in a diffraction optical lens 16 having an excellent diffraction efficiency.

By forming a non-reflective interference film on the front or back surface of the diffraction optical lens 16, 17, or 19, as the reflection at the diffraction optical lens 16, 17, or 19 becomes little, the sensibility of the pyroelectric type infrared sensor can be further improved.

Also by providing an interference film filter passing only a specific range of wave length, by vapor deposition method for example, on the surface of the infrared ray filter 15, 18 or 20, the surface is the opposite side surface to the surface on which the diffraction optical lens 16, 17, or 19 is formed, the disturbance light such as the sun light and incandescent light can be cut and the sensibility of the pyroelectric type infrared sensor can be further improved.

Also, by forming the diffraction optical lens 16, 17, or 19 on the surface facing the pyroelectric element 1, that is, inside of the seal tube 2, the recessed slots are protected from damage, dust, stain, and the like, thus the function can be kept semi-permanently.

Also, by forming the pyroelectric element 1 of a thin film of lead titanate containing lanthanum, the pyroelectric type infrared sensor can be made further smaller.

Further, diffraction optical lens 16, 17, or 19 is used as a diffraction optical element though, the same effect can be obtained by using a variable refractive index type diffraction optical lens.

## Claims

1. Pyroelectric type infrared sensor comprising:
a pyroelectric element (1,11,13) for detecting infrared rays (6);
a seal body (2) accommodating said pyroelectric element and having an opening (5);
an incident infrared ray filter (3,15) provided at the opening of said seal body (2);
a diffraction optical element array (14) provided on the front or back surface of said incident infrared ray filter (15);
said diffraction optical element array (14) having at least two diffraction optical elements (16), said diffraction optical elements being adapted to focus or image incident infrared rays onto said pyroelectric element (1,11,13), respectively and having recessed slots corresponding to their phase modulation amounts,
whereby the pattern figure of said recessed slots is elliptic, the center position of each thus constituted ellipse is gradually shifted in the direction of the corresponding major axis of the ellipse as the center position of the ellipse is more remote from the center of the diffraction optical element array (14).

2. The pyroelectric type infrared sensor of claim 1, wherein each of said diffraction optical elements (16) has recessed slots corresponding to its phase modulation amounts, the depths of all of said recessed slots on each of said diffraction optical elements being the same, and the figure of said recessed slots being adapted to depend on the wave length of the incident infrared rays.

3. The pyroelectric type infrared sensor of claim 1, wherein each of said diffraction optical elements (16) has recessed slots corresponding to its phase modulation amounts, said recessed slots being formed by dry etching method.

4. The pyroelectric type infrared sensor of claim 1, wherein each of said diffraction optical elements (16) has recessed slots corresponding to its phase modulation amounts, the figure of the recessed slots being stairs with m steps, the maximum depth of said recessed slot being (m-1) / m x λ / (n-1), where m denotes the number of steps, λ denotes wave length of the main incident infrared rays and n denotes refractive index of the incident infrared ray filter.

5. The pyroelectric type infrared sensor of claim 1, wherein each of said diffraction optical elements (16) has recessed slots corresponding to its phase modulation amounts, said recessed slots being formed in rectangular shapes.

6. The pyroelectric type infrared sensor of claim 1, wherein each of said diffraction optical elements (16) has a wider area as the position of the diffraction optical element moves toward the circumference of the diffraction optical element array (14).

7. The pyroelectric type infrared sensor of claim 1, wherein each of said diffraction optical element array (14) is formed by arranging a plurality of diffraction optical elements (16) in side by side relation without gap.

8. The pyroelectric type infrared sensor of claim 1, wherein among a plurality of diffraction optical elements (16), the incident angle in the central portion of diffraction optical elements is 0°, and the incident angle increases as the position of the diffraction optical element moves toward the circumference of the diffraction optical element array.

9. The pyroelectric type infrared sensor of claim 1, wherein said incident infrared ray filter (3,15) and said diffraction optical elements (16) are made of an identical substance, said substance having a refractive index of more than 3 and including at least one selected from silicon or germanium; or at least one from gallium and indium and at least one from arsenic and phosphorus.

10. The pyroelectric type infrared sensor of claim 9, wherein said incident infrared ray filter (3,15) and said diffraction optical elements (16) are made of a substance selected from silicon, germanium, gallium arsenide, indium phosphide, and gallium phosphide.

11. The pyroelectric type infrared sensor of claim 1, wherein said diffraction optical elements (16) have a non-reflection interference film on their front surfaces or back surfaces.

12. The pyroelectric type infrared sensor of claim 1, wherein said incident infrared ray filter (3,15) has an interference film filter on its surface opposite to the surface on which the diffraction optical elements are formed, said interference film filter passing a specific range of the wave length.

13. The pyroelectric type infrared sensor of claim 1, wherein said diffraction optical elements (16) are formed on the surface of the incident infrared ray filter (3,15), said surface facing the pyroelectric element.

14. The pyroelectric type infrared sensor of claim 1, wherein said pyroelectric element (13) is formed on a thin film of lead titanate containing lanthanum.

## Patentansprüche

1. Pyroelektrischer Infrarotsensor mit:
einem pyroelektrischen Element (1, 11, 13) zum Feststellen von Infrarotstrahlen (6),
einer Dichtungshülle (2), die das pyroelektrische Element aufnimmt und eine Öffnung (5) aufweist,
einem Infraroffilter (3, 15), der an der Öffnung der Dichtungshülle (2) vorgesehen ist,
einer optischen Beugungselementanordnung (14), die an der Vorder- oder Rückoberfläche des Infrarotfilters (15) vorgesehen ist,
wobei die optische Beugungselementanordnung (14) wenigstens zwei optische Beugungselemente (16) umfaßt, wobei die optischen Beugungselemente dazu ausgebildet sind, einfallende Infrarotstrahlen auf das pyroelektrische Element (1, 11, 13) zu fokussieren bzw. abzubilden, und jeweils Vertiefungsschlitze in Übereinstimmung mit deren Phasenmodulationsgrößen aufweisen,
wobei die Form der Vertiefungsschlitze elliptisch ausgebildet ist, wobei die Zentrumsposition dieser Ellipsen graduell in der Richtung der längeren Achse verschoben ist, je weiter die Zentrumsposition der Ellipse vom Zentrum der optischen Beugungselementanordnung (14) entfernt ist.

2. Pyroelektrischer Infrarotsensor nach Anspruch 1, wobei jedes der optischen Beugungselemente (16) Vertiefungsschlitze in Übereinstimmung mit seinen Phasenmodulationsgrößen aufweist, wobei die Tiefe aller Vertiefungsschlitze in den optischen Beugungselementen gleich ist, und wobei die Form der Vertiefungsschlitze in Abhängigkeit von der Wellenlänge der einfallenden Infrarotstrahlen ausgebildet ist.

3. Pyroelektrischer Infrarotsensor nach Anspruch 1, wobei jedes der optischen Beugungselemente (16) Vertiefungsschlitze aufweist, die seinen Phasenmodulationsgrößen entsprechen, wobei die Vertiefungsschlitze durch ein Trockenätzverfahren ausgebildet sind.

4. Pyroelektrischer Infrarotsensor nach Anspruch 1, wobei jedes der optischen Beugungselemente (16) Vertiefungsschlitze in Übereinstimmung mit seinen Phasenmodulationsgrößen aufweist, wobei die Vertiefungsschlitze treppenförmig mit m Stufen ausgebildet sind, wobei die maximale Tiefe der Vertiefungsschlitze (m-1) / m x λ/ (n-1) ist, wobei m die Anzahl der Stufen, λ die Wellenlänge der hauptsächlich einfallenden Infrarotstrahlen und n den Brechungsindex des Infrarotfilters angibt.

5. Pyroelektrischer Infrarotsensor nach Anspruch 1, wobei jedes der optischen Beugungselemente (16) Vertiefungsschlitze in Übereinstimmung mit seinen Phasenmodulationsgrößen aufweist, wobei die Vertiefungsschlitze mit rechteckigen Formen ausgebildet sind.

6. Pyroelektrischer Infrarotsensor nach Anspruch 1, wobei die optischen Beugungselemente (16) größere Fläche aufweisen, je weiter außen zum Umfang der optischen Beugungselementanordnung hin die optischen Beugungselemente angeordnet sind.

7. Pyroelektrischer Infrarotsensor nach Anspruch 1, wobei die optische Beugungselementanordnung (14) durch die Seite-an-Seite-Anordnung einer Vielzahl von optischen Beugungselementen (15) ohne Zwischenraum dazwischen gebildet ist.

8. Pyroelektrischer Infrarotsensor nach Anspruch 1, wobei bei der Vielzahl von optischen Beugungselementen (16) der Einfallswinkel bei den im Zentrum angeordneten optischen Beugungselementen gleich 0° ist und größer wird, je weiter außen zum Umfang der optischen Beugungselementanordnung hin die optischen Beugungselemente angeordnet sind.

9. Pyroelektrischer Infrarotsensor nach Anspruch 1, wobei das Infraroffilter (3, 15) und die optischen Beugungselemente (16) aus demselben Material ausgebildet sind, das einen Brechungsindex von mehr als 3 aufweist und wenigstens Silizium und/oder Germanium oder wenigstens Gallium und/oder Indium und wenigstens Arsen und/oder Phosphor umfaßt.

10. Pyroelektrischer Infrarotsensor nach Anspruch 9, wobei das Infraroffilter (3, 15) und die optischen Beugungselemente (16) aus einem Material ausgebildet sind, das wenigstens Silizium, Germanium, Galliumarsenid, Indiumphosphid und/oder Galliumphosphid umfaßt.

11. Pyroelektrischer Infrarotsensor nach Anspruch 1, wobei die optischen Beugungselemente (16) einen nicht reflektierenden Interferenzfilm auf ihren Vorder- oder Rückoberflächen aufweisen.

12. Pyroelektrischer Infrarotsensor nach Anspruch 1, wobei das Infraroffilter (3, 15) einen Interferenzfilterfilm auf der Oberfläche aufweist, die der Oberfläche mit den darauf ausgebildeten optischen Beugungselementen gegenüberliegt, wobei der Interferenzfilterfilm einen bestimmten Wellenlängenbereich durchläßt.

13. Pyroelektrischer Infrarotsensor nach Anspruch 1, wobei die optischen Beugungselemente (16) auf der Oberfläche des Infrarotfilters (3, 15) ausgebildet sind, die dem pyroelektrischen Element zugewendet ist.

14. Pyroelektrischer Infrarotsensor nach Anspruch 1, wobei das pyroelektrische Element (13) aus einem dünnen Film aus Bleititanat, das Lanthan enthält, ausgebildet ist.

## Revendications

1. Capteur infrarouge de type pyroélectrique comprenant :
un élément pyroélectrique (1, 11, 13) pour détecter des rayons infrarouges (6) ;
un corps étanche (2) recevant ledit élément pyroélectrique et ayant une ouverture (5) ;
un filtre pour rayons infrarouges incidents (3, 15) disposé sur l'ouverture dudit corps étanche (2) ;
un groupement d'éléments optiques de diffraction (14) disposé sur la surface avant ou arrière dudit filtre pour rayons infrarouges incidents (15) ;
ledit groupement d'éléments optiques de diffraction (14) ayant au moins deux éléments optiques de diffraction (16), lesdits éléments optiques de diffraction étant respectivement adaptés à focaliser ou à former l'image de rayons infrarouges incidents sur ledit élément pyroélectrique (1, 11, 13), et ayant des encoches évidées correspondant à leurs degrés de modulation de phase,
la figure du motif desdites encoches évidées étant elliptique, la position centrale de chaque ellipse ainsi constituée se décalant progressivement dans la direction du grand axe correspondant de l'ellipse à mesure que la position du centre de l'ellipse s'éloigne du centre du groupement d'éléments optiques de diffraction (14).

2. Capteur infrarouge de type pyroélectrique selon la revendication 1, dans lequel chacun desdits éléments optiques de diffraction (16) comporte des encoches évidées correspondant à ses degrés de modulation de phase, les profondeurs de toutes lesdites encoches évidées sur chacun desdits éléments optiques de diffraction étant identiques, et la figure formée par lesdites encoches évidées étant adaptée à dépendre de la longueur d'onde des rayons infrarouges incidents.

3. Capteur infrarouge de type pyroélectrique selon la revendication 1, dans lequel chacun desdits éléments optiques de diffraction (16) présente des encoches évidées correspondant à ses degrés de modulation de phase, lesdites encoches évidées étant formées par un procédé d'attaque à sec.

4. Capteur infrarouge de type pyroélectrique selon la revendication 1, dans lequel chacun desdits éléments optiques de diffraction (16) comporte des encoches évidées correspondant à ses degrés de modulation de phase, la figure formée par les encoches évidées étant celle d'escaliers à m marches, la profondeur maximale de ladite encoche évidée étant de (m-1)/m x λ/(n-1), où m désigne le nombre de marches, λ désigne la longueur d'onde des rayons infrarouges incidents principaux, et n désigne l'indice de réfraction du filtre pour rayons infrarouges incidents.

5. Capteur infrarouge de type pyroélectrique selon la revendication 1, dans lequel chacun desdits éléments optiques de diffraction (16) comporte des encoches évidées correspondant à ses degrés de modulation de phase, lesdites encoches évidées étant formées selon des formes rectangulaires.

6. Capteur infrarouge de type pyroélectrique selon la revendication 1, dans lequel chacun desdits éléments optiques de diffraction (16) a une superficie d'autant plus large que la position de l'élément optique de diffraction est proche de la périphérie du groupement d'éléments optiques de diffraction (14).

7. Capteur infrarouge de type pyroélectrique selon la revendication 1, dans lequel chacun dudit groupement d'éléments optiques de diffraction (14) est formé par agencement d'une pluralité d'éléments optiques de diffraction (16) selon une relation côte à côte sans interstice.

8. Capteur infrarouge de type pyroélectrique selon la revendication 1, dans lequel, parmi une pluralité d'éléments optiques de diffraction (16), l'angle d'incidence dans la partie centrale des éléments optiques de diffraction est de 0° et l'angle d'incidence est d'autant plus grand que la position de l'élément optique de diffraction est proche de la périphérie du groupement d'éléments optiques de diffraction.

9. Capteur infrarouge de type pyroélectrique selon la revendication 1, dans lequel ledit filtre pour rayons infrarouges incidents (3, 15) et lesdits éléments optiques de diffraction (16) sont faits d'une même substance, ladite substance ayant un indice de réfraction supérieur à 3 et comportant au moins un élément sélectionné parmi le silicium ou le germanium ; ou au moins l'un du gallium et de l'indium et au moins l'un de l'arsenic et du phosphore.

10. Capteur infrarouge de type pyroélectrique selon la revendication 9, dans lequel ledit filtre pour rayons infrarouges incidents (3, 15) et lesdits éléments optiques de diffraction (16) sont faits d'une substance sélectionnée parmi le silicium, le germanium, l'arséniure de gallium, le phosphure d'indium, et le phosphure de gallium.

11. Capteur infrarouge de type pyroélectrique selon la revendication 1, dans lequel lesdits éléments optiques de diffraction (16) ont un film d'interférence non réfléchissant sur leur surface avant ou leur surface arrière.

12. Capteur infrarouge de type pyroélectrique selon la revendication 1, dans lequel ledit filtre pour rayons infrarouges incidents (3, 15) a un filtre à film d'interférence sur sa surface opposée à la surface sur laquelle sont formés les éléments optiques de diffraction, ledit filtre à film d'interférence laissant passer une gamme particulière de longueurs d'onde.

13. Capteur infrarouge de type pyroélectrique selon la revendication 1, dans lequel lesdits éléments optiques de diffraction (16) sont formés sur la surface du filtre pour rayons infrarouges incidents (3, 15), ladite surface étant tournée vers ledit élément pyroélectrique.

14. Capteur infrarouge de type pyroélectrique selon la revendication 1, dans lequel ledit élément pyroélectrique (13) est formé sur un film mince de titanate de plomb contenant du lanthane.
